# EUROPEAN PATENT APPLICATION

(11) **EP 4 737 785 A1**
(43) Date of publication of application: **06.05.2026**
(21) Application number: 25212775.8
(22) Date of filing: 31.10.2025
(51) Int. Cl.: F16M 11/04, A61G 13/10, F16M 11/22, F16M 13/02

(54) **ACCESSORY CONNECTOR FOR PATIENT SUPPORT**

(30) Priority: 31.10.2024 US 202463714286 P; 30.10.2025 US 202519374586
(71) Applicant: Baxter Medical Systems GmbH + Co. KG, 07318 Saalfeld (DE)
(72) Inventor: SCHINDLER, Maik, Batesville, 47006 (US); KUTZ, Stephan, Batesville, 47006 (US); VASUKI RAO, Vishakh, Batesville, 47006 (US); HAUDEK, Tino, Batesville, 47006 (US); BAUMGÄRTNER, Julia, Batesville, 47006 (US); DOß, René, Batesville, 47006 (US)
(74) Representative: Reddie & Grose LLP

(57) **Abstract**

An accessory connector (20) for securing an accessory (18) to a patient support assembly includes a body (22) that has first and second ends and a hook (24) that is disposed at the first end. An accessory engagement feature (26) is disposed at the second end. The accessory engagement feature (26) includes a linear distal engagement end (28) with a planar extent that is spaced from and parallel with a planar extent of the body (22). The hook (24) includes opposing sides (32, 34) that define opposing recesses (36, 38). The hook (24) extends at an acute angle relative to the body (22).

## Description

### FIELD OF THE DISCLOSURE

The present disclosure generally relates to an accessory interface or an accessory connector for an operating table or patient table accessory, and more particularly to an accessory connector that secures an accessory, such as a remote control, to a patient support, while minimizing the likelihood of damage to the accessory.

### SUMMARY OF THE DISCLOSURE

According to another aspect of the present disclosure, an accessory connector for securing a controller to a patient support includes a body that has a hook and an accessory engagement feature. The accessory engagement feature includes a linear distal engagement end. The hook includes opposing sides that define opposing recesses and a rounded distal end that extends away from the body of the accessory connector. A rail is configured to support the hook. A sidewall of the patient support is configured to support the rail. The rounded distal end of the hook is in abutting contact with the patient support. An accessory is operably coupled with the accessory engagement feature of the body.

According to another aspect of the present disclosure, an accessory connector for securing a controller to a patient support assembly includes a body with first and second ends. A hook is disposed at the first end and an accessory engagement feature is disposed at the second end. The accessory engagement feature includes a linear distal engagement end with a planar extent that is spaced from and parallel with a planar extent of the body. The hook includes opposing sides that define opposing recesses. The hook extends at an acute angle relative to the body.

According to another aspect of the present disclosure, a patient support assembly includes a patient support with a rail that extends from a side of the patient support. The system also includes an accessory connector with a body, a hook, and an accessory engagement feature. The accessory engagement feature includes a linear distal engagement end that has a planar extent that is spaced from and parallel with a planar extent of the accessory connector. The hook includes opposing sides that define opposing recesses. The hook extends at an acute angle relative to the body and is configured to receive the rail. Aan accessory is configured to control the patient support and is operably coupled with the accessory engagement feature of the body of the accessory connector.

According to an aspect of the present disclosure, an accessory connector includes a body with a hook and an accessory engagement feature. The accessory engagement feature includes a linear distal engagement end with a planar extent that is spaced from and parallel with a planar extent of the body. The hook includes opposing sides that define opposing recesses. The hook extends at an acute angle relative to the body. A rail is configured to support the hook. An accessory is operably coupled with the accessory engagement feature of the body.

The hook and / or at least one body may be covered with a polymeric material. The at least one body and / or the hook may be constructed completely of a polymeric material.

The hook may be configured to swing about a rail.

The hook may include a latch. The latch may be spring biased to a closed position.

According to another aspect of the present disclosure, an accessory connector for securing a controller to a patient support includes a body that has a hook and an accessory engagement feature. The accessory engagement feature includes a linear distal engagement end. The hook includes opposing sides that define opposing recesses and a rounded distal end that extends away from the body of the accessory connector. A rail is configured to support the hook. A sidewall of the patient support is configured to support the rail. The rounded distal end of the hook is in abutting contact with the patient support. An accessory is operably coupled with the accessory engagement feature of the body.

The accessory engagement feature may be fixedly coupled with an accessory.

The accessory may be a remote control.

According to another aspect of the present disclosure, an accessory connector for securing a controller to a patient support assembly includes a body with first and second ends. A hook is disposed at the first end and an accessory engagement feature is disposed at the second end. The accessory engagement feature includes a linear distal engagement end with a planar extent that is spaced from and parallel with a planar extent of the body. The hook includes opposing sides that define opposing recesses. The hook extends at an acute angle relative to the body.

The hook may be constructed from a material having high elasticity.

The hook may be configured to swing about a rail supporting an accessory connector.

The accessory may be one of glued, fastened, welded or integral with a housing of the accessory.

At least one of the body and the hook may include a low flexural strength.

According to still another aspect of the present disclosure, a patient support assembly includes a patient support with a rail that extends from a side of the patient support. The system also includes an accessory connector with a body, a hook, and an accessory engagement feature. The accessory engagement feature includes a linear distal engagement end that has a planar extent that is spaced from and parallel with a planar extent of the accessory connector. The hook includes opposing sides that define opposing recesses. The hook extends at an acute angle relative to the body and is configured to receive the rail. An accessory is configured to control the patient support and is operably coupled with the accessory engagement feature of the body of the accessory connector.

The patient support may be a surgical table.

The accessory may be a remote control and an accessory connector may be a remote control holder.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1A is a top perspective view of a patient support apparatus with an accessory connector attached thereto, according to the present disclosure;
FIG. 1B is an enlarged view of the patient support apparatus and accessory connector attached thereto of FIG. 1A;
FIG. 2 illustrates an object prior to collision with an accessory and/or a rail of a patient support apparatus, according to the present disclosure;
FIG. 3 illustrates an object colliding with an accessory hanging from an accessory connector attached to a rail of a patient support apparatus and the accessory movement path, according to the present disclosure;
FIG. 4 is a bottom, rear perspective view of an accessory connector, according to the present disclosure;
FIG. 5 is a front perspective view of an accessory connector, according to the present disclosure;
FIG. 6 is a rear perspective view of an accessory connector, according to the present disclosure;
FIG. 7 is a rear elevational view of an accessory connector, according to the present disclosure; and
FIG. 8 is a side elevational view of an accessory connector, according to the present disclosure.

### DETAILED DESCRIPTION

The present illustrated embodiments reside primarily in combinations of method steps and apparatus components related to an accessory interface or an accessory connector for an operating room table or patient table accessory. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

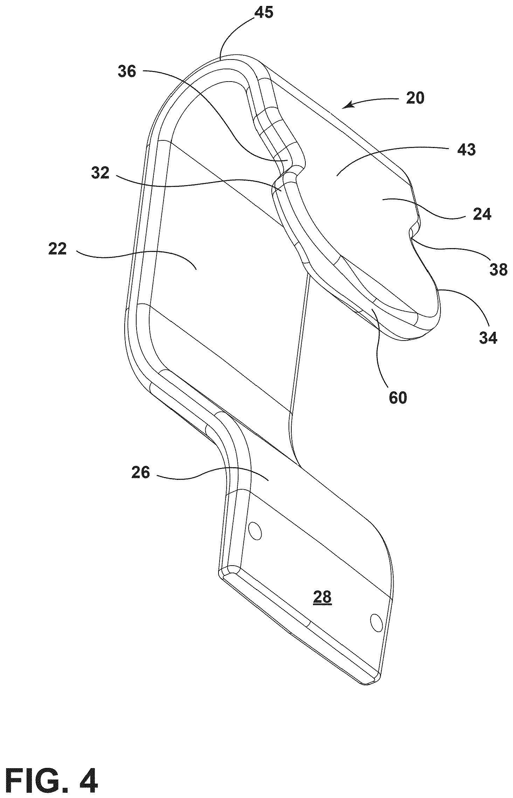

For purposes of description herein, the terms "upper," "lower," "right," "left," "rear," "front," "vertical," "horizontal," and derivatives thereof, shall relate to the disclosure as oriented in FIG. 4. Unless stated otherwise, the term "front" shall refer to a surface closest to an intended viewer, and the term "rear" shall refer to a surface furthest from the intended viewer. However, it is to be understood that the disclosure may assume various alternative orientations, except where expressly specified to the contrary. It is also to be understood that the specific structures and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a ... " does not, without more constraints, preclude the existence of additional identical elements in the process, method, article, or apparatus that comprises the element.

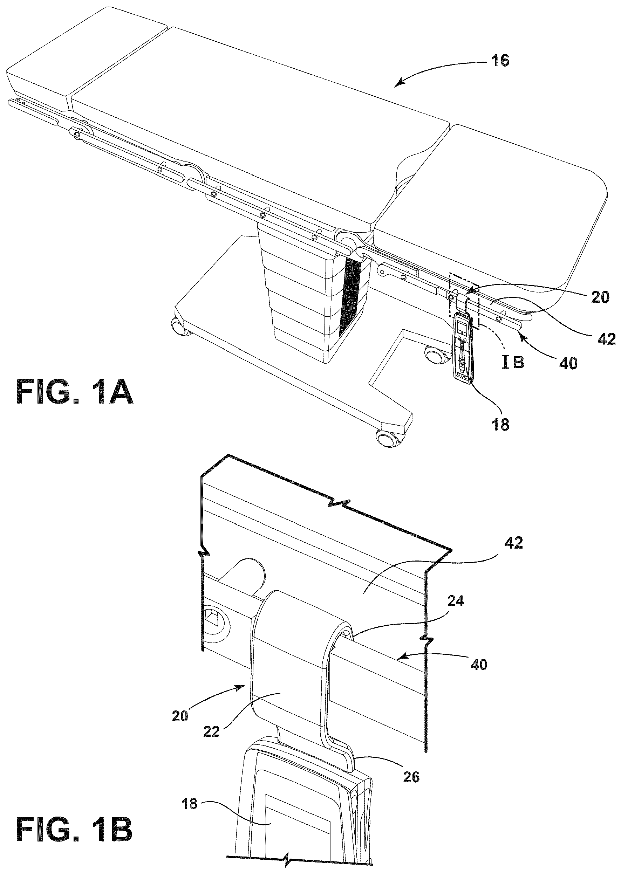

FIGS. 1A and 1B illustrate a patient support assembly that has a patient support 16 that includes an accessory 18. It will be understood that the patent support 16 may be an operating or surgical table, a hospital bed, a stretcher, etc. The accessory 18 includes an accessory interface or accessory connector 20 that has a body 22 with a hook 24 and an accessory engagement feature 26. The accessory engagement feature 26 includes a linear distal engagement end 28 with a planar extent that is spaced from and parallel with a planar extent of the body 22. The hook 24 includes opposing sides 32, 34 that define opposing recesses 36, 38. The hook 24 extends at an acute angle relative to the body 22. A sidewall 42 of the patient support 16 may act as a rail support and be operably coupled to a rail 40. The rail 40 is configured to support the hook 24. The accessory 18 is operably coupled with the accessory engagement feature 26 of the body 22.

With reference again to FIGS. 1A and 1B, the accessory 18 may be any of a variety of electronic devices, that interact via a wired connection or wirelessly with a local device on the patient support 16 or a remote device, such as a monitor or television located in an operating suite. More specifically, the accessory 18 may be a remote control, a wireless controller, etc. that controls or operates a variety of surgical suite devices that interact with the surgical device wirelessly via Wi-Fi, Bluetooth, etc. The accessory connector 20 may be glued, fastened, welded, or integral with a housing of the accessory 18. Because the accessory 18 houses electronic components therein, a suitable interface for interacting with the patient support 16 is important. An interface that is rigid or otherwise interferes with travel or interaction between adjacent patient supports can result in the accessory 18 being damaged or broken. Consequently, an accommodating interface between the accessory 18 and the patient support 16 that allows for movement of the accessory 18 is desirable. The accessory connector 20 constitutes an intermediary structure that may be in the form of a coupler or connector that removably secures the accessory 18 to the rail 40. The accessory connector 20 may also be in the form of a remote control holder among other accessory holders.

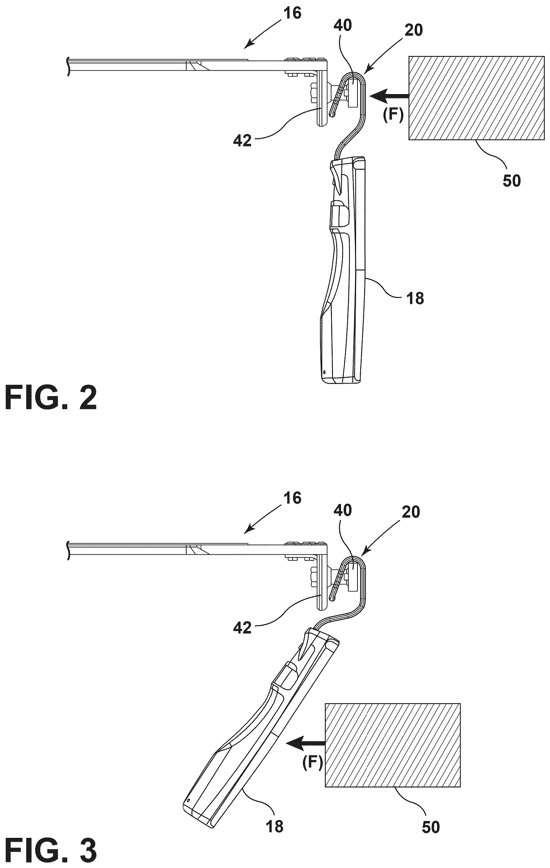

As illustrated in FIGS. 2 and 3, an exemplary collision event is represented where an object 50 is moved into a position proximate the patient support 16. In some instances, the object 50 may abut or forcibly interact with the patient support 16, which could result in damage to the accessory 18. The accessory connector 20 set forth herein minimizes the likelihood of damage to the accessory 18 and provides an accommodating interface between the accessory 18 and the patient support 16. As shown in FIG. 2, when the object 50 abuts the rail 40 of the patient support 16, force is directed through the accessory connector 20 to the rail 40. In this instance, the body 22 and/or the hook 24 is configured to receive the force of impact (F) and transfer that force (F) to the rail 40 without breaking or bending. In this instance, the body 22 of the accessory connector 20 is arranged relatively parallel with the rail 40 such that forces transmitted by the object 50 to the rail 40 are partially absorbed by the body 22 of the accessory connector 20, without damaging the accessory connector 20. In some instances, as shown in FIG. 3, if the object 50 is lower than the rail 40, the accessory 18 is free to swing, bend, rotate, or a combination thereof, about the rail 40 because of the construction of the accessory connector 20. In fact, the accessory 18 could rotate nearly 90 degrees to accommodate movement of the object 50. A rigid connection between the accessory 18 and the rail 40 would not provide this accommodation and could result in damage to the accessory 18. Generally, the configuration of the hook 24 relative to the body 22 secures the accessory 18 to the rail 40 such that forces applied normal to the rail 40 are absorbed through the body 22 of the accessory connector 20 and into the patient support 16 while forces below the rail 40 simply cause the accessory connector 20 to bend or rotate relative to the patient support 16.

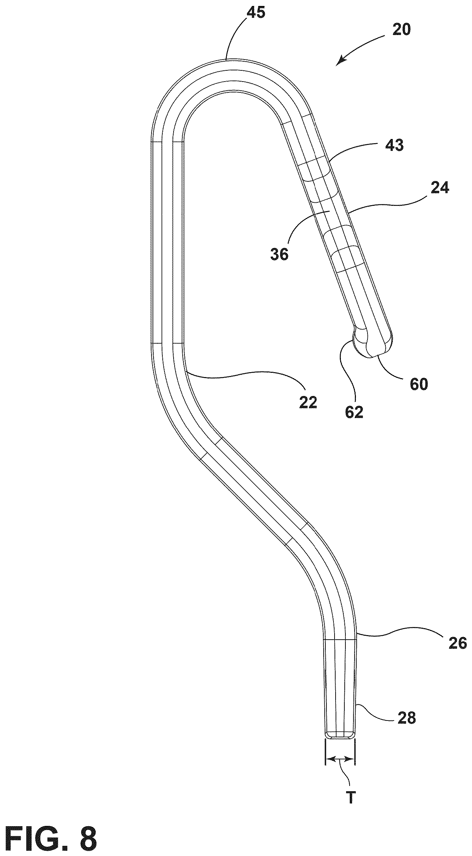

With reference to FIG. 4, the accessory connector 20 includes a relatively sleek body 22 that has first and second ends and a uniform thickness T throughout (see FIG. 8). The body 22 may include a generally planar construction. The hook 24 is disposed at the first end of the body 22 and the engagement feature 26 is disposed at the second end of the body 22. The hook 24 includes a planar portion 43 that connects to the body 22 by an arced intermediate section 45. It is contemplated that the thickness can vary at the body 22 of the accessory connector 20 at the hook 24, and/or at the accessory engagement feature 26 depending on the intended use. It is also contemplated that the accessory connector 20 may include a relatively rigid frame covered by a flexible material configured to withstand and absorb dynamic forces applied to the accessory connector 20. The length of the hook 24 provides sufficient versatility to allow for the accessory 18 to move away from the object 50 and toward the patient support 16 during a collision event. The flexibility can be obtained by using materials with high elasticity or low flexural strength for one or both of the body 22 and the hook 24. Low flexural strength for purposes of this disclosure may include values of less than 100 MPa. It is contemplated that flexible plastics, such as polyvinyl chloride (PVC), low-density or high-density polyethylene or polypropylene may be used to construct the accessory connector 20. Alternatively, the accessory connector 20 may be formed from a flexible aluminum, stainless steel, or any other easily cleanable but flexible metal.

In addition, variations in a width (W) of the hook 24 at specific areas along the hook 24 can result in additional flexibility of the accessory connector 20. The construction of the accessory connector 20 also allows for the accessory 18 to be placed anywhere about a patient support 16, not just at a predefined location where a complementary interface component is situated on the patient support 16. With this added versatility, the accessory connector 20 also assists in minimizing the likelihood that a collision event even occurs. In addition, the opposing recesses 36, 38 may also be larger or smaller, have differing sizes, or be positioned elsewhere on the hook 24.

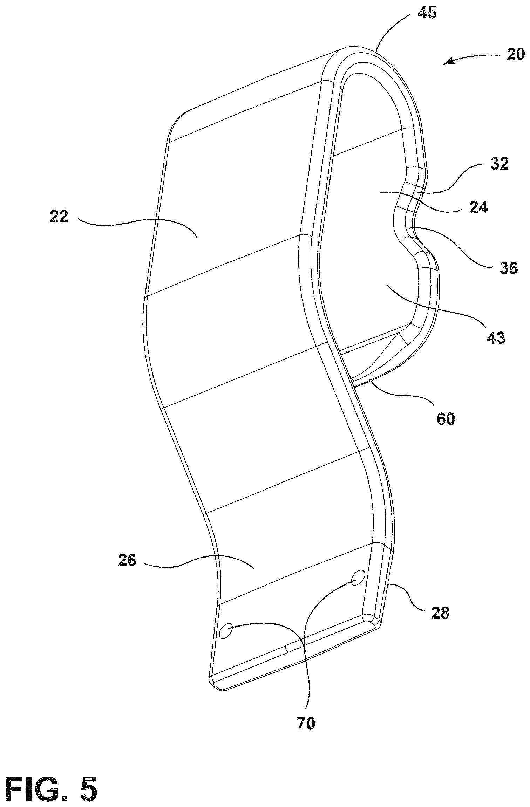

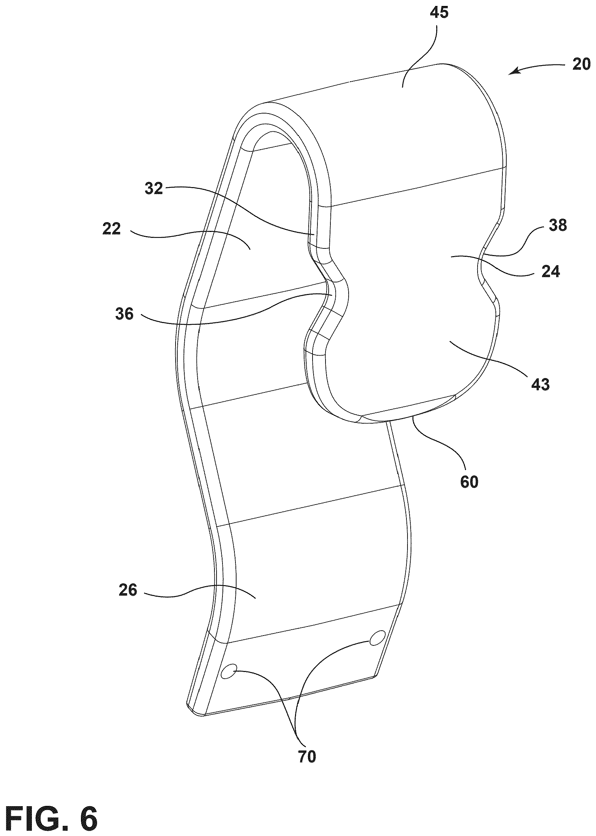

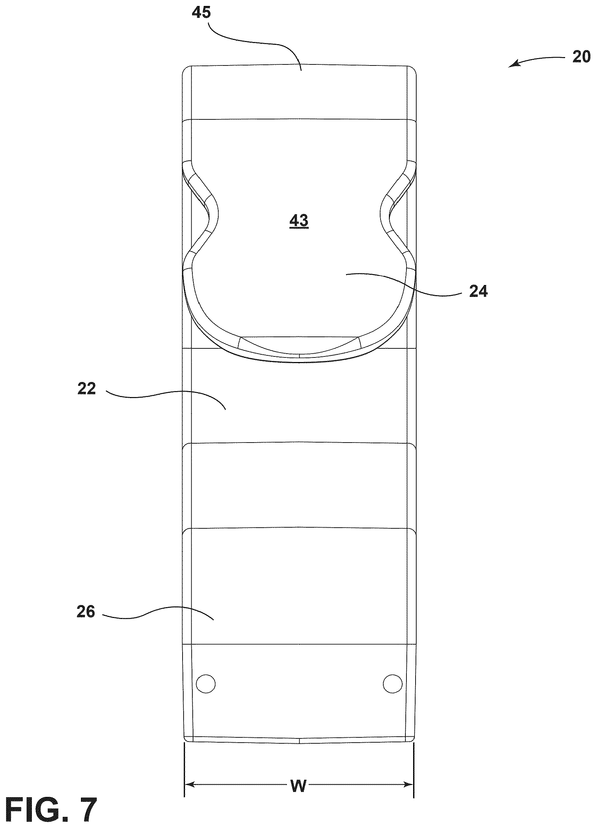

With reference again to FIG. 4, as well as to FIGS. 5-8, the hook 24 of the accessory connector 20 includes a rounded or tapered distal end 60 that extends away from the body 22. The taper may be at the distal end 60 or may start proximate the opposing recesses 36, 38. The opposing recesses 36, 38 may add to the flexibility of the hook 24 and also provide a grasping surface for a user. It is contemplated that a thickness of the rounded distal end 60 may be greater than or less than the remainder of the hook 24. In some instances, as shown in FIG. 8, the accessory connector 20 may include an enlarged protuberance 62 at the rounded distal end 60 of the hook 24. As illustrated, the enlarged protuberance 62 may be only on an inside surface of the hook 24. However, it is contemplated that the enlarged protuberance 62 may also be on an outside surface of the hook 24 or both on the outside surface and on the inside surface of the hook 24. Also, in some instances the hook 24 may include a latch to prevent or minimize the likelihood that the hook 24 becomes dislodged. In this instance, the latch will be spring-biassed to a closed position. In addition, the linear distal engagement end 28 includes apertures 70 for receiving mechanical fasteners that may fasten the accessory 18 to the accessory connector 20. Alternatively, the accessory connector 20 may be connected via adhesive or any other mechanical connection that serves to maintain a coupling between the accessory 18 and the accessory connector 20. It is also generally contemplated that the linear distal engagement end 28 may be formed as part of a housing of the accessory 18.

All or a portion of the accessory connector 20 may also be covered by a material that has high elasticity, such as a rubber or Styrene-Butadiene rubber (SBR) or Styrene copolymer. Various other elastomers may also be utilized, such as polymer materials with a high elastic nature and which include natural rubber, synthetic rubber, nitrile rubber, silicone rubber, urethane rubbers, chloroprene rubber, Ethylene Vinyl Acetate (EVA rubber), etc.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure, as shown in the exemplary embodiments, is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts, or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes.

## Claims

1. An accessory connector (20) for securing an accessory (18) to a patient support assembly, comprising:
a body (22) having first and second ends;
a hook (24) disposed at the first end;
an accessory engagement feature (26) disposed at the second end, wherein the accessory engagement feature (26) includes a linear distal engagement end (28) having a planar extent that is spaced from and parallel with a planar extent of the body (22), and wherein the hook (24) includes opposing sides (32, 34) defining opposing recesses (36, 38), the hook (24) extending at an acute angle relative to the body (22).

2. The accessory connector (20) of claim 1, wherein the hook (24) is constructed from a material having high elasticity.

3. The accessory connector (20) of claim 1 or 2, wherein the hook (24) is configured to swing about a rail (40) supporting said accessory connector (20).

4. The accessory connector (20) of claim 1, 2 or 3, wherein the accessory engagement feature (26) is fixedly coupled with said accessory (18).

5. The accessory connector (20) of claim 4, wherein said accessory connector (20) is one of glued, fastened, welded or integral with a housing of said accessory (18).

6. The accessory connector (20) of any of the preceding claims, wherein at least one of the body (22) and the hook (24) includes a low flexural strength.

7. The accessory connector (20) of any of the preceding claims, wherein at least one of the body (22) and the hook (24) is constructed of a polymeric material.

8. The accessory connector (20) of any of the preceding claims, wherein the hook (24) includes a latch.

9. The accessory connector (20) of claim 8, wherein the latch is spring biased to a closed position.

10. The accessory connector (20) of any of the preceding claims, wherein the hook (24) includes a tapered distal end (60).

11. The accessory connector (20) of claim 10, wherein the hook (24) includes an enlarged protuberance (62) at the tapered distal end (60) of the hook (24).

12. The accessory connector (20) of any of the preceding claims, wherein the hook (24) and body (22) include a planar construction.

13. The accessory connector (20) of claim 12, wherein the hook (24) includes a planar portion (43) that is connected to the body (22) by an arced intermediate section (45).

14. The accessory connector (20) of claim 13, wherein the planar portion (43) of the hook (24) extends away from the body (22).

15. The accessory connector (20) of any preceding claim, wherein said accessory (18) is a remote control.
